# EUROPEAN PATENT SPECIFICATION

(11) **EP 3 703 296 B1**
(45) Date of publication and mention of the grant of the patent: **30.07.2025**
(21) Application number: 18879126.3
(22) Date of filing: 27.10.2018
(51) Int. Cl.: H04L 5/00, H04W 72/04

(54) **USER EQUIPMENT AND ACCESS DEVICE**
BENUTZERGERÄT UND ZUGANGSVORRICHTUNG
ÉQUIPEMENT D'UTILISATEUR ET DISPOSITIF D'ACCÈS

(30) Priority: 17.11.2017 CN 201711148365
(43) Date of publication of application: 02.09.2020
(73) Proprietor: Huawei Technologies Co., Ltd., Longgang District Shenzhen, Guangdong 518129 (CN)
(72) Inventor: JIN, Huangping, Shenzhen Guangdong 518129 (CN); LIU, Yong, Shenzhen Guangdong 518129 (CN); WU, Ye, Shenzhen Guangdong 518129 (CN); HAN, Wei, Shenzhen Guangdong 518129 (CN)
(74) Representative: Körber, Martin Hans
(86) International application number: PCT/CN2018/112255
(87) International publication number: WO 2019/095969

(56) References cited:
- WO-A1-2017/193878
- CN-A- 102 685 038
- CN-A- 103 262 459
- US-A1- 2015 117 350
- CATT: "PRB bundling for DL transmission", vol. RAN WG1, no. Prague, Czech Rep; 20171009 - 20171013, 8 October 2017 (2017-10-08), XP051340994, Retrieved from the Internet <URL:http://www.3gpp.org/ftp/Meetings_3GPP_SYNC/RAN1/Docs/> [retrieved on 20171008]
- HUAWEI ET AL: "PRB bundling size for DL data precoding", vol. RAN WG1, no. Qingdao, China; 20170627 - 20170630, 26 June 2017 (2017-06-26), XP051299150, Retrieved from the Internet <URL:http://www.3gpp.org/ftp/Meetings_3GPP_SYNC/RAN1/Docs/> [retrieved on 20170626]
- NOKIA ET AL: "On details of PRB Bundling", vol. RAN WG1, no. Shanghai; 20170415 - 20170419, 14 May 2017 (2017-05-14), XP051274075, Retrieved from the Internet <URL:http://www.3gpp.org/ftp/Meetings_3GPP_SYNC/RAN1/Docs/> [retrieved on 20170514]
- SAMSUNG: "PRB bundling for NR DMRS", vol. RAN WG1, no. Prague, CZ; 20171009 - 20171013, 8 October 2017 (2017-10-08), XP051340783, Retrieved from the Internet <URL:http://www.3gpp.org/ftp/Meetings_3GPP_SYNC/RAN1/Docs/> [retrieved on 20171008]

## Description

### TECHNICAL FIELD

Embodiments of the present invention relate to channel measurement technologies, and in particular, to user equipment and an access device.

### BACKGROUND

Transmission efficiency of wireless communications is closely related to a channel condition. Therefore, selecting a transmission parameter that matches the channel condition is critical to the wireless communications. For example, when the channel condition is relatively good, a relatively radical modulation and coding scheme (Modulation and Coding Scheme, MCS) may be selected to improve a transmission throughput. When the channel condition is relatively poor, a relatively conservative MCS may be selected to improve transmission robustness.

Usually, the channel condition may be determined through channel measurement. Downlink channel measurement is used as an example. User equipment (for example, but not limited to a smartphone) receives a downlink reference signal sent by an access device (for example, but not limited to a base station), determines a downlink channel condition based on the downlink reference signal, and notifies the access device of the downlink channel condition. In this way, the access device selects an appropriate transmission parameter.

A result of the channel measurement may be usually represented by using channel state information (Channel State Information, CSI). For example, the CSI may include, but is not limited to, one or more of the following information: a channel quality indicator (Channel Quality Indicator, CQI), a precoding matrix indicator (Precoding Matrix Indicator, PMI), a precoding type indicator (Precoding Type Indicator, PTI), and a CSI reference signal resource indicator (CSI-RS Resource Indicator, CRI), a rank indication (Rank Indication, RI), and other information.

Usually, the channel measurement needs to be performed based on a specific measurement mechanism. Different measurement mechanisms usually have different measurement processes and measurement results. A latest research shows that a next generation wireless communications system introduces a measurement mechanism which is referred to as semi-persistent measurement. In the semi-persistent measurement, a CQI of a CSI reporting band (CSI reporting band) is calculated by using a precoding resource block group (Precoding Resource block Group, PRG) as a basic unit. Therefore, a PRG size (PRG size) is crucial to the semi-persistent measurement. To enable the PRG size to be flexibly changed based on a specific requirement, the PRG size may be indicated through configuration.

However, it is not difficult to understand that configuring the PRG size by using dedicated configuration signaling inevitably causes signaling overheads, and affects transmission efficiency. Therefore, there is no mechanism to reduce the signaling overheads caused by configuring the PRG size.

CATT: "PRB bundling for DL transmission", 3GPP DRAFT; R1-1717809, vol. TSG RAN WG1 Meeting #90bis, no. Prague, Czech Republic, 9th- 13th October 2017 discloses considerations on DL DMRS design for NR MIMO.

HUAWEI ET AL: "PRB bundling size for DL data precoding", 3GPP DRAFT; R1-1709925, vol. TSG RAN WG1 NR Ad Hoc Meeting, no. Qingdao, China, 27-30 June 2017 discusses configuration and indication procedure and schemes for the UE-specific configurable PRG sizes for PRB bundling.

NOKIAET AL: "On details of PRB Bundling", 3GPP DRAFT; R1-1708897, vol. TSG RAN WG1 #89, no. Hanzhou, P.R. China, 15th-19th April 2017 discloses PRB bundling for both uplink and downlink.

SAMSUNG: "PRB bundling for NR DMFiS", 3GPP DRAFT; R1-1717597, vol. TSG RAN WG1 Meeting 90bis, no. Prague, Czech Republic, 9th-13th October 2017 discloses precoding granularity for NR DMRS.

### SUMMARY

In view of this, it is necessary to provide user equipment, to help reduce signaling overheads caused by configuring a PRG size.

In addition, an access device is provided, to help reduce the signaling overheads caused by configuring the PRG size.

The present invention is defined by a user equipment according to independent claim 1, an access device according to independent claim 5. Additional features of the invention are provided in the dependent claims.

In technical solutions provided in the embodiments of the present invention, a PRG size is configured by configuring a PRB bundling size. In this way, there is no need to set dedicated signaling for configuring the PRG size. This helps reduce signaling overheads caused by configuring the PRG size.

### BRIEF DESCRIPTION OF DRAWINGS

FIG. 1 is a schematic diagram of an example of a wireless communications network according to an embodiment of the present invention;
FIG. 2 is a schematic diagram of an example of a logical structure of user equipment according to an embodiment of the present invention;
FIG. 3 is a schematic diagram of an example of a logical structure of an access device according to an embodiment of the present invention;
FIG. 4 is a schematic diagram of an example of a logical structure of an access device according to an embodiment of the present invention;
FIG. 5 is a flowchart of an example of a configuration method;
FIG. 6 is a flowchart of an example of a configuration method according to an embodiment of the present invention;
FIG. 7 is a flowchart of an example of a configuration method according to an embodiment of the present invention; and
FIG. 8 is a schematic diagram of a hardware structure of a communications device according to an embodiment of the present invention.

### DESCRIPTION OF EMBODIMENTS

A next generation wireless communications system being currently developed may be referred to as a new radio (New Radio, NR) system or a 5G system. According to a latest research progress, in the next-generation wireless communications system, a measurement mechanism includes at least semi-open-loop (Semi-open loop) measurement and closed-loop (Close loop) measurement. The semi-open-loop measurement may also be referred to as a semi-open-loop feedback (Semi-open loop feedback). The closed-loop measurement may also be referred to as a closed-loop feedback (Close loop feedback).

The semi-open-loop measurement may be used to perform channel measurement on a CSI reporting band. The CSI reporting band may be understood as a frequency band on which CSI needs to be reported. Further, the CSI reporting band may include a plurality of subbands (Subband). These subbands may be continuous, or may be incontinuous, or at least some subbands may be continuous. Continuity of these subbands is not limited in the embodiments of the present invention. Furthermore, these subbands may belong to a same specific frequency band, and the specific frequency band may be set based on a requirement. The embodiments of the present invention set no limitation on the specific frequency band. For example, the specific frequency band may be a bandwidth part (Bandwidth part). The bandwidth part may be understood as one continuous frequency band. The frequency band includes at least one continuous subband. Each bandwidth part may correspond to one group of numerologies (numerology), including but not limited to a subcarrier spacing (Subcarrier spacing) and a cyclic prefix (Cyclic Prefix, CP). Different bandwidth parts may correspond to different system numerologies. Optionally, within a same transmission time interval (Transmission Time Interval, TTI), in a plurality of bandwidth parts, only one bandwidth part may be available and other bandwidth parts are unavailable. In addition to the foregoing features, in a specific implementation process, a definition of the CSI reporting band may be further limited.

When the semi-open-loop measurement is performed on the CSI reporting band, fed-back CSI may include CSI of an entire CSI reporting band. The CSI of the entire CSI reporting band herein may also be referred to as wideband CSI of the CSI reporting band. The CSI refers to CSI obtained by calculating the CSI reporting band as a whole instead of a set of CSI obtained by performing the semi-open-loop measurement on each part (for example, but not limited to each sub-band) of the CSI reporting band. For example, a CQI of the entire CSI reporting band may be calculated in, for example, but not limited to, the following manner. For each PRG included in the CSI reporting band, a precoding matrix is randomly selected from a codebook. The codebook may be a codebook indicated by codebook subset restriction (Codebook Subset Restriction) signaling. The codebook is usually determined based on channel statistics information. Therefore, the codebook can match a change trend of a channel condition to some extent. A channel matrix corresponding to the PRG is multiplied by the precoding matrix, to obtain an equivalent channel matrix of the PRG, and a signal to interference plus noise ratio (Signal to Interference plus Noise Ratio, SINR) of the equivalent channel matrix is determined. An average value of SINRs of all PRGs included in the CSI reporting band or another value that can reflect an overall SINR of the CSI reporting band is calculated, a corresponding CQI is determined based on the value, and the corresponding CQI is used as the CQI of the entire CSI reporting band.

The closed-loop measurement may be used to perform the channel measurement on a CSI reporting band, a subband, a subband group, or the like. For example, when the closed-loop measurement is performed on the subband, a precoding matrix may be selected from a codebook according a rule such as channel capacity maximization or throughput maximization, and the precoding matrix is reported by using a PMI. In addition, a channel matrix of the subband may be multiplied by the precoding matrix to obtain an equivalent channel matrix of the subband. After a SINR of the equivalent channel matrix is calculated, a corresponding CQI may be determined based on the SINR. When a CQI of the subband group is calculated, the CQI corresponding to the subband group may also be obtained with reference to the method for calculating the average value of the SINR during the semi-persistent measurement. A person skilled in the art should understand that, in a specific implementation process, the CQI may also be calculated by using another method, and a specific calculation method is not limited in the embodiments of the present invention.

A channel measurement process is before data transmission. Therefore, during data transmission, CSI determined in the channel measurement process may change. In a low-speed scenario, the channel condition does not change rapidly. Therefore, during data transmission, the CSI that is previously determined in the channel measurement process does not change greatly. In this case, because in the closed-loop measurement, the CSI is determined based on the channel condition, the CSI is more suitable for the channel condition. Therefore, a data transmission effect is better. However, in a high-speed scenario, the channel condition changes rapidly. During data transmission, the CSI that is previously determined in the channel measurement process may change greatly. Consequently, the CSI that previously obtained through measurement is outdated, and cannot match the channel condition. In this case, the CSI determined through the semi-open-loop measurement can usually achieve a better effect. As described above, the precoding matrix used in the semi-open-loop measurement is selected from a specific codebook. The codebook is determined based on the channel statistics information, and may match a change trend of the channel condition to some extent. Therefore, even if the codebook is randomly selected, the codebook matches the channel condition to some extent. On the other hand, the CQI determined through the semi-open-loop measurement is determined based on a plurality of randomly selected precoding matrices in a unit of a PRG, and a diversity transmission effect is introduced to some extent. Therefore, the transmission effect is more robust.

When downlink channel measurement is performed, the process of calculating the CSI is usually performed by the equipment. The user equipment determines the CSI, and reports the CSI to an access device.

For further details about the semi-open-loop measurement and the closed-loop measurement, reference may be made to the prior art, for example, but not limited to technical standards and proposals related to the next-generation wireless communications system. As research deepens, in the next-generation wireless communications system, operation details of the semi-open-loop measurement and the closed-loop measurement may also change. However, after understanding the technical solutions provided in the embodiments of the present invention, a person skilled in the art should understand that the technical solutions provided in the embodiments of the present invention are also applicable to changed semi-open-loop measurement and closed-loop measurement.

It can be learned from the foregoing description that in the semi-open-loop measurement, an SINR needs to be calculated by using a PRG as a basic unit in a CQI calculation process. Therefore, a PRG size is crucial to the semi-open-loop measurement. The PRG size may be usually understood as a frequency band width of the PRG. Usually, the PRG includes a plurality of resource blocks (Resource Block, RB). Therefore, the PRG size may be specifically a quantity of RBs included in the PRG. To enable the PRG size to be flexibly changed based on a specific requirement, the PRG size may be indicated in a configuration manner. However, it is not difficult to understand that configuring the PRG size inevitably causes signaling overheads, and affects transmission efficiency.

A precoding technology is one of core technologies of a MIMO technology. In the technology, a to-be-transmitted signal is processed by using a precoding matrix that matches a channel attribute, so that a precoded to-be-transmitted signal matches a channel. Therefore, a transmission process is optimized, and received signal quality (for example, an SINR) is improved. Currently, the precoding technology is adopted by a plurality of wireless communications standards, for example, but is not limited to long term evolution (Long Term Evolution, LTE).

In a process of precoding data transmission, a width of a frequency band on which precoding is performed based on a same precoding matrix usually needs to be determined. The width of the frequency band is usually indicated by a physical resource block bundling size (PRB (Physical RB) bundling size). In comparison, as described above, when the CQI is calculated based on the semi-persistent measurement, each randomly selected precoding matrix is used to precode one PRG. Therefore, a width of a frequency band to which the randomly selected precoding matrix is applicable is a width of a frequency band of the PRG, namely, a PRG size. It can be learned that a PRG size used in a semi-persistent measurement process is similar to a PRB bundling size used in a data transmission precoding process. Therefore, it may be attempted to set the PRG size to be equal to the PRB bundling size. In this way, a PRG size associated with channel measurement may be indicated by indicating the PRB bundling size. This reduces signaling overheads caused by configuring the PRG size.

According to a latest research progress, in a next-generation wireless communications system, an access device preconfigures a plurality of PRB bundling sizes for user equipment by using configuration signaling, and a PRB bundling size specifically used in the precoding process is selected by the access device from the plurality of PRB bundling sizes and indicated to the user equipment. Specifically, in a configuration process, the access device configures the plurality of PRB bundling sizes for the user equipment by using radio resource control (Radio Resource Control, RRC) signaling or other signaling. In the precoding process, the access device specifically indicates, by using downlink control information (Downlink Control Information, DCI) or other signaling, the PRB bundling size specifically used in the precoding process. It can be learned that the next-generation wireless communications system notifies the PRB bundling size in a manner of configuration and indication. The configuration process is used to configure the plurality of PRB bundling sizes, and an indication process is used to indicate, in the configured plurality of PRB bundling sizes, the PRB bundling size used in the precoding process. It should be noted that the foregoing manner of notifying the PRB bundling size may not be unique, and another manner of notifying the PRB bundling size may also be defined in a next-generation wireless communications standard. For example, only one PRB bundling size may be configured in a process of configuring the PRB bundling size. In this case, a process of notifying the PRB bundling size only includes the configuration process, and does not need to include the indication process.

In addition, when the PRB bundling size that is in the plurality of PRB bundling sizes and that is used in the precoding process is indicated, a plurality of manners may be used for indication, for example, but are not limited to, to-be-indicated information may be directly indicated, for example, the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and another part of the to-be-indicated information is known or agreed on in advance. In addition, a specific indication manner may alternatively be various combinations of the foregoing indication methods, or the like. In a specific implementation process, a required indication manner may be selected based on a specific requirement. A selected indication manner is not limited in this embodiment of the present invention. In this way, the indication manner in this embodiment of the present invention should be understood as covering various methods that enable a to-be-indicated party to learn of the to-be-indicated information. In addition, the to-be-indicated information may be sent as a whole, or may be divided into a plurality of pieces of sub-information and sent separately. In addition, sending periods and/or sending occasions of the plurality of pieces of sub-information may be the same, or may be different. For a specific sending method, refer to the prior art. This is not limited in the present invention.

Further, according to the latest research progress, in the next-generation wireless communications system, it is recommended that the PRG size is indicated by using RRC signaling or other signaling. In other words, the PRG size is not notified in a manner similar to the manner of configuration and indication used in the process of notifying the PRB bundling size. Therefore, the PRG size may be set to be the same as a PRB bundling size configured by using the RRC signaling or other signaling. In this way, the PRB bundling size may be configured to indicate the PRG size associated with the channel measurement.

However, as described above, in a process of configuring the PRB bundling size by using the RRC signaling or other signaling, there are usually a plurality of configured PRB bundling sizes. In this case, which PRB bundling size of the plurality of PRB bundling sizes is used as the PRG size becomes a problem to be urgently resolved.

A solution to the foregoing problem is to forcibly set the PRB bundling size configured by using the RRC signaling or other signaling to one. However, this inevitably causes an inflexible PRB bundling size.

The embodiments of the present invention provide a technical solution, and the PRG size may be determined according to a preset indication rule and a plurality of configured PRB bundling sizes. The technical solution provided in the embodiments of the present invention is described in detail with reference to the accompanying drawings and specific embodiments.

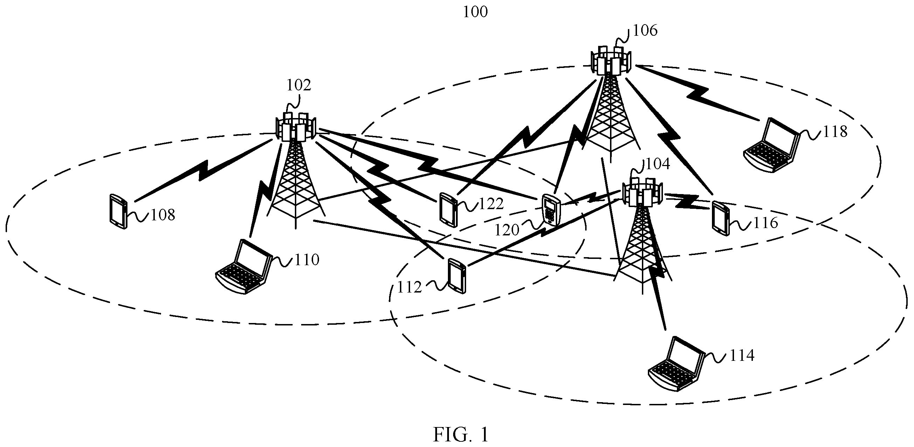

FIG. 1 is a schematic diagram of an example of a wireless communications network 100. As shown in FIG. 1, a wireless communications network 100 includes base stations 102, 104, and 106 and terminal devices 108, 110, 112, 114, 116, 118, 120, and 122. The base stations 102, 104, and 106 may communicate with each other by using a backhaul (backhaul) link (shown as straight lines between the base stations 102, 104, and 106). The backhaul link may be a wired backhaul link (for example, an optical fiber or a copper cable), or may be a wireless backhaul link (for example, a microwave). The terminal devices 108, 110, 112, 114, 116, 118, 120, and 122 may communicate with corresponding base stations 102, 104, and 106 by using a radio link (shown as polygonal lines between the base stations 102, 104, and 106 and the terminal devices 108, 110, 112, 114, 116, 118, 120, and 122).

The base stations 102, 104, and 106 usually provide, as access devices, a radio access service for the terminal devices 108, 110, 112, 114, 116, 118, 120, and 122 that generally serve as user equipment. Specifically, each base station corresponds to a service coverage area (which may be referred to as a cellular, shown in an oval area in FIG. 1), and a terminal device entering the area may communicate with the base stations by using a radio signal, to receive the wireless access services provided by the base stations. Service coverage areas of the base stations may overlap. A terminal device in an overlapping area may receive radio signals from a plurality of base stations. Therefore, these base stations may coordinate with each other, to provide a service for the terminal device. For example, the plurality of base stations may provide the service for the terminal device in the overlapping area by using a coordinated multipoint (Coordinated multipoint, CoMP) technology. For example, as shown in FIG. 1, a service coverage area of the base station 102 overlaps a service coverage area of the base station 104, and the terminal device 112 falls into the overlapping area. Therefore, the terminal device 112 may receive radio signals from the base station 102 and the base station 104. The base station 102 and the base station 104 may coordinate with each other, to provide a service for the terminal device 112. For another example, as shown in FIG. 1, a common overlapping area exists in service coverage areas of the base stations 102, 104, and 106, and the terminal device 120 falls into the overlapping area. Therefore, the terminal device 120 may receive radio signals from the base stations 102, 104, and 106. The base stations 102, 104, and 106 may coordinate with each other, to provide a service for the terminal device 120.

Depending on a wireless communications technology in use, a base station may also be referred to as a NodeB (NodeB), an evolved NodeB (evolved NodeB, eNodeB), an access point (Access Point, AP), or the like. In addition, based on a size of a coverage area in which a service is provided, a base station may be classified into a macro base station for providing a macro cell (Macro cell), a micro base station for providing a micro cell (Pico cell), a femto base station for providing a femto cell (Femto cell), and the like. With evolution of the wireless communications technologies, the base stations may have other names in the future.

The terminal devices 108, 110, 112, 114, 116, 118, 120, and 122 may be various wireless communications devices that have a wireless communications function, for example, but are not limited to a mobile cellular phone, a cordless phone, a personal digital assistant (Personal Digital Assistant, PDA), a smartphone, a notebook computer, a tablet computer, a wireless data card, and a wireless modem (Modulator demodulator, Modem), or a wearable device such as a smartwatch. With emergence of internet of things (Internet of Things, IOT) technologies and internet of vehicles (Vehicle-to-everything, V2X) technologies, more and more devices that do not have a communications function before, for example, but are not limited to a household appliance, a transportation vehicle, a tool device, a service device, and a service facility, start to obtain a wireless communications function by configuring a wireless communications unit, access a wireless communications network, and accept remote control. This type of device has the wireless communications function because the wireless communications unit is configured for this type of device. Therefore, this type of device is also a kind of wireless communications device. In addition, the terminal devices 108, 110, 112, 114, 116, 118, 120, and 122 may be further referred to as mobile stations, mobile devices, mobile terminals, wireless terminals, handheld devices, clients, and the like.

A plurality of antennas may be configured for the base stations 102, 104, and 106 and the terminal devices 108, 110, 112, 114, 116, 118, 120 and 122, to support a MIMO (multiple-input multiple-output, Multiple-Input Multiple-Output) technology. Further, the base stations 102, 104, and 106 and the terminal devices 108, 110, 112, 114, 116, 118, 120, and 122 may not only support a single-user MIMO (Single-User MIMO, SU-MIMO) technology, but also support a multi-user MIMO (Multi-User MIMO, MU-MIMO) technology. The MU-MIMO may be implemented based on a space division multiple access (Space Division Multiple Access, SDMA) technology. Because the plurality of antennas are configured, the base stations 102, 104, and 106 and the terminal devices 108, 110, 112, 114, 116, 118, 120, and 122 may further flexibly support a single input single output (Single Input Single Output, SISO) technology, a single input multiple output (Single Input Multiple Output, SIMO) technology, and a multiple input single output (Multiple Input Single Output, MISO) technology, to implement various diversity (for example, but not limited to, transmit diversity and receive diversity) and multiplexing technologies. The diversity technology may include, for example, but is not limited to, a transmit diversity (Transmit Diversity, TD) technology and a receive diversity (Receive Diversity, RD) technology, and the multiplexing technology may be a spatial multiplexing (Spatial Multiplexing) technology. In addition, the foregoing technologies may further include a plurality of implementation solutions. For example, the transmit diversity technology may include diversity manners such as space-time transmit diversity (Space-Time Transmit Diversity, STTD), space-frequency transmit diversity (Space-Frequency Transmit Diversity, SFTD), time switched transmit diversity (Time Switched Transmit Diversity, TSTD), frequency switched transmit diversity (Frequency Switch Transmit Diversity, FSTD), orthogonal transmit diversity (Orthogonal Transmit Diversity, OTD), and cyclic delay diversity (Cyclic Delay Diversity, CDD), and diversity manners obtained by deriving, evolving, and combining the foregoing diversity manners. For example, currently, transmit diversity manners such as space time block coding (Space Time Block Coding, STBC), space frequency block coding (Space Frequency Block Coding, SFBC), and the CDD are used in LTE (Long Term Evolution, Long Term Evolution) standard. A general description of transmit diversity is provided above by using examples. A person skilled in the art needs to understand that, in addition to the foregoing examples, the transmit diversity is further implemented in a plurality of other manners. Therefore, the foregoing descriptions should not be understood as limitations on the technical solutions of the present invention, and it should be understood that the technical solutions of the present invention are applicable to various possible transmit diversity solutions.

In addition, the base stations 102, 104, and 106 and the terminal devices 108, 110, 112, 114, 116, 118, 120, and 122 may communicate with each other by using various wireless communications technologies, for example, but not limited to, a time division multiple access (Time Division Multiple Access, TDMA) technology, a frequency division multiple access (Frequency Division Multiple Access, FDMA) technology, a code division multiple access (Code Division Multiple Access, CDMA) technology, a time division-synchronous code division multiple access (Time Division-Synchronous Code Division Multiple Access, TD-SCDMA) technology, an orthogonal frequency division multiple access (Orthogonal FDMA, OFDMA) technology, a single carrier frequency division multiple access (Single Carrier FDMA, SC-FDMA) technology, and a space division multiple access (Space Division Multiple Access, SDMA) technology, and evolved and derived technologies of these technologies. As radio access technologies (Radio Access Technology, RAT), the foregoing wireless communications technologies are adopted by various wireless communications standards, so that various wireless communications systems (or networks) that are well known today are constructed. These wireless communications systems include, but are not limited to, a global system for mobile communications (Global System for Mobile Communications, GSM), CDMA 2000, wideband CDMA (Wideband CDMA, WCDMA), Wi-Fi defined in a 802.11 series standard, worldwide interoperability for microwave access (Worldwide Interoperability for Microwave Access, WiMAX), long term evolution (Long Term Evolution, LTE), LTE-advanced (LTE-Advanced, LTE-A), and evolved systems of these wireless communications systems. Unless otherwise specified, the technical solutions provided in the embodiments of the present invention may be applied to the foregoing various wireless communications technologies and wireless communications systems. In addition, the terms "system" and "network" can be interchanged with each other.

It should be noted that the wireless communications network 100 shown in FIG. 1 is merely used as an example, and is not intended to limit the technical solutions of the present invention. A person skilled in the art should understand that in a specific implementation process, the wireless communications network 100 may further include another device, and a quantity of base stations and a quantity of terminal devices may be further configured based on a specific requirement.

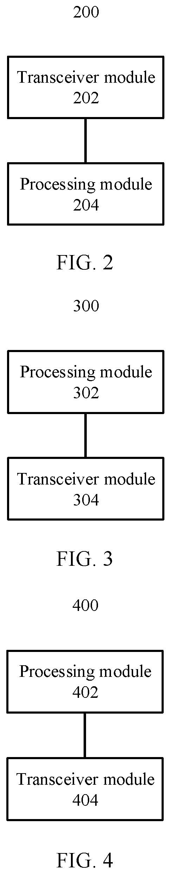

FIG. 2 is a schematic diagram of an example of a logical structure of user equipment 200 according to an embodiment of the present invention. As shown in FIG. 2, the user equipment 200 includes a transceiver module 202 and a processing module 204.

The transceiver module 202 is configured to receive configuration information, and the configuration information is used to configure at least one PRB bundling size.

The processing module 204 is configured to determine a PRG size based on the at least one PRB bundling size.

Specifically, the PRG size is a PRG size associated with channel measurement. The PRG size may be the same as or different from a PRG size that is in a data transmission process. The data transmission may be, for example, but is not limited to, data transmission performed by using a physical downlink shared channel (Physical Downlink Shared Channel, PDSCH).

In the technical solution provided in this embodiment of the present invention, the PRG size is configured by configuring the PRB bundling size. In this way, there is no need to set dedicated signaling for configuring the PRG size. This helps reduce signaling overheads caused by configuring the PRG size.

In a specific implementation process, the configuration information comes from an access device, and the configuration information may be sent by using, for example, but not limited to, one of the following signaling:
physical layer signaling;
media access control layer signaling; and
radio resource control signaling.

The physical layer signaling is also referred to as layer 1 (Layer 1, L1) signaling, and may usually be carried in a control part in a physical layer frame. A typical example of the L1 signaling is DCI carried on a physical downlink control channel (Physical Downlink Control Channel, PDCCH) and uplink control information (Uplink Control Information, UCI) carried in a physical uplink control channel (Physical Uplink Control Channel, PUCCH) that are defined in an LTE standard. In some cases, the L1 signaling may alternatively be carried in a data part in the physical layer frame. For example, sometimes, the UCI may alternatively be carried on a physical uplink shared channel (Physical Uplink Shared Channel, PUSCH). It is not difficult to learn that a sending period or a signaling period of the L1 signaling is usually a period of the physical layer frame. Therefore, the signaling is usually used to implement some dynamic control, to transfer some frequently changed information. For example, resource allocation information may be transferred by using physical layer signaling.

The media access control (Media Access Control, MAC) layer signaling belongs to layer 2 (Layer 2) signaling, and may be usually carried in, for example, but not limited to, a frame header of a layer 2 frame. The frame header may further carry, for example, but not limited to, information such as a source address and a destination address. In addition to the frame header, the layer 2 frame usually further includes a frame body. In some cases, the L2 signaling may alternatively be carried in the frame body of the layer 2 frame. A typical example of the layer 2 signaling is signaling carried in a frame control (Frame Control) field in a frame header of a MAC frame in 802.11 series of standards, or a MAC control entity (Control Entity, MAC-CE) defined in some protocols. The layer 2 frame may be usually carried in the data part of the physical layer frame. The configuration information may alternatively be sent by using other layer 2 signaling than the media access control layer signaling.

The RRC signaling belongs to layer 3 (Layer 3) signaling, and is usually some control messages. The L3 signaling may be usually carried in the frame body of the layer 2 frame. A sending period or a control period of the L3 signaling is usually relatively long, and the L3 signaling is applicable to sending of some information that does not change frequently. For example, in some existing communications standards, the L3 signaling is usually used to carry some configuration information. The configuration information may alternatively be sent by using other layer 3 signaling than the RRC signaling.

The foregoing describes only principles of the physical layer signaling, the MAC layer signaling, the RRC signaling, the layer 1 signaling, the layer 2 signaling, and the layer 3 signaling. For details about the three types of signaling, refer to the prior art. Therefore, details are not described herein.

In a specific implementation process, the configuration information may be preferentially transmitted by using the layer 3 signaling, for example, but not limited to the RRC signaling. This is because a plurality of PRB bundling sizes configured by using the configuration information usually do not change frequently.

For related technical content of the PRB bundling size, refer to the prior art. Details are not described in the embodiments of the present invention.

The embodiment of this paragraph is not part of the invention, but an illustrative example necessary for understanding the invention. The at least one PRB bundling size may include only one PRB bundling size. In this case, the processing module 204 may use the PRB bundling size as the PRG size. As described above, one PRB bundling size configured by using the RRC signaling or other signaling may be forcibly set. In this case, the specified PRB bundling size is used as the PRG size. However, as described above, this method inevitably causes an inflexible PRB bundling size.

The at least one PRB bundling size includes a plurality of PRB bundling sizes. In this case, the PRG size is a PRB bundling size that is in the plurality of PRB bundling sizes and that is indicated by a preset indication rule. Specifically, the indication rule may be, for example, but is not limited to, one or a combination of the following rules:
a rule 1: a maximum value of the plurality of PRB bundling sizes is used as the PRG size;
a rule 2: a minimum value of the plurality of PRB bundling sizes is used as the PRG size; and
a rule 3: in the plurality of PRB bundling sizes, a PRB bundling size whose arrangement location is a preset location is used as the PRG size, where further, for example, the preset location may be set as the first location or the last location.

Usually, when the configuration information includes a plurality of PRB bundling sizes, these PRB bundling sizes are usually arranged in the configuration information in a specific order. In this way, the PRB bundling size used as the PRG size may be determined according to the rule 3.

In another implementation solution, the configuration information further includes indication information, and the indication information is used to indicate the PRB bundling size that is in the plurality of PRB bundling sizes and that is used as the PRG size. Specifically, the indication information may indicate an index of the PRB bundling size, or the indication information may indicate how to select, in the plurality of PRB bundling sizes, the PRB bundling size used as the PRG size. For example, the indication information may indicate one or a combination of the foregoing rules.

The following describes the foregoing rules and solutions in detail by using specific examples.

It is assumed that specific information included in the configuration information is shown in Table 1.

**Table 1**

| Index | PRB bundling size |
|---|---|
| 1 | 2 |
| 2 | 4 |
| 3 | 8 |

It can be learned from Table 1 that the configuration information includes three PRB bundling sizes that are sequentially arranged, which are respectively 2, 4, and 8, and indexes of the three PRB bundling sizes are respectively 1, 2, and 3. When the indication rule is the rule 1, the determined PRG size is 8. When the indication rule is the rule 2, the determined PRG size is 2. When the indication rule is the rule 3 and the preset location in the rule 3 is a location 1, the determined PRG size is 2.

For another example, the indication information in the configuration information further indicates that the PRG size is a PRB bundling size, that is, 4, at an arrangement location 2. For another example, the indication information further indicates that the PRG size is a PRB bundling size, that is, 8, whose index is 3.

FIG. 3 is a schematic diagram of an example of a logical structure of an access device 300 according to an embodiment of the present invention. As shown in FIG. 3, the access device 300 includes a processing module 302 and a transceiver module 304.

The processing module 302 is configured to generate configuration information, and the configuration information is used to configure a plurality of PRB bundling sizes, and in the plurality of PRB bundling sizes, a PRB bundling size whose arrangement location is a preset location is used as a PRG size.

The transceiver module 304 is configured to send the configuration information.

Specifically, the configuration information is sent to user equipment.

As described above, the configuration information may be used to configure the plurality of PRB bundling sizes. In this case, the PRG size is a PRB bundling size that is in the plurality of PRB bundling sizes and that is indicated by a preset indication rule. Still further, according to the preset indication rule, in the plurality of PRB bundling sizes configured by using the configuration information, a PRB bundling size whose arrangement location is the preset location may be used as the PRG size. In a specific implementation process, the preset location may be set as the first location or the last location.

In this case, to help the user equipment determine, according to the preset rule, the PRB bundling size that is in the plurality of PRB bundling sizes and that is used as the PRG size, when generating the configuration information, the access device needs to arrange the PRB bundling size used as the PRG size at the preset location in the plurality PRB bundling sizes configured by using the configuration information.

Various technical details related to the access device 300 have been described in detail above with reference to the user equipment 200. Therefore, details are not described herein again.

FIG. 4 is a schematic diagram of an example of a logical structure of an access device 400 according to an embodiment of the present invention. As shown in FIG. 4, the access device 400 includes a processing module 402 and a transceiver module 404.

The processing module 402 is configured to generate configuration information, and the configuration information is used to configure a plurality of PRB bundling sizes, the configuration information includes indication information, and the indication information is used to indicate a PRB bundling size that is in the plurality of PRB bundling sizes and that is used as a PRG size.

The transceiver module 404 is configured to send the configuration information.

Specifically, the configuration information is sent to user equipment.

Various technical details related to the access device 400 have been described in detail above with reference to the user equipment 200. Therefore, details are not described herein again.

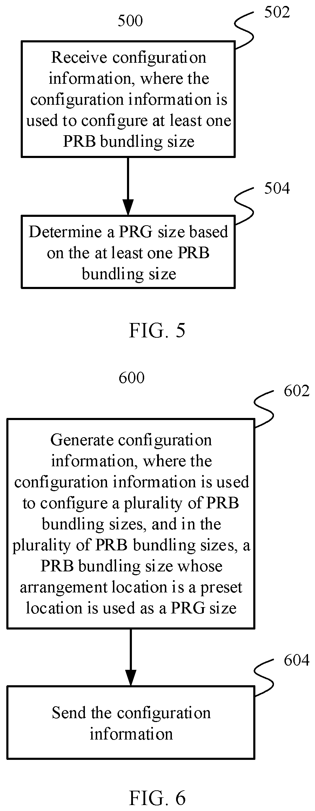

FIG. 5 is an example flowchart of a configuration method 500. In a specific implementation process, the method 500 may be performed by user equipment.

Step 502: Receive configuration information, where the configuration information is used to configure at least one PRB bundling size.

Step 504: Determine a PRG size based on the at least one PRB bundling size.

Related technical details in the method 500 are described in detail above. Therefore, details are not described herein again.

FIG. 6 is an example flowchart of a configuration method 600 according to an embodiment of the present invention. In a specific implementation process, the method 600 may be performed by an access device.

Step 602: Generate configuration information, where the configuration information is used to configure a plurality of PRB bundling sizes, and in the plurality of PRB bundling sizes, a PRB bundling size whose arrangement location is a preset location is used as a PRG size.

Step 604: Send the configuration information.

Related technical details in the method 600 are described in detail above. Therefore, details are not described herein again.

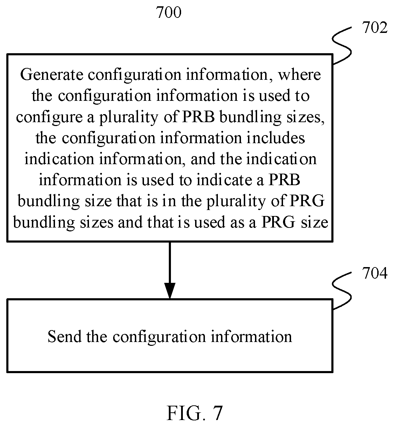

FIG. 7 is an example flowchart of a configuration method 700 according to an embodiment of the present invention. In a specific implementation process, the method 700 may be performed by an access device.

Step 702: Generate configuration information, where the configuration information is used to configure a plurality of PRB bundling sizes, the configuration information includes indication information, and the indication information is used to indicate a PRB bundling size that is in the plurality of PRB bundling sizes and that is used as a PRG size.

Step 704: Send the configuration information.

Related technical details in the method 700 are described in detail above. Therefore, details are not described herein again.

It can be easily learned that the methods 500 to 700 correspond to the user equipment 200, the receiving device 300, and the receiving device 400, and the foregoing operations of the foregoing devices are the foregoing methods. The related technical solutions are described in detail above with reference to the user equipment 200, the receiving device 300, and the receiving device 400. Therefore, details are not described herein again.

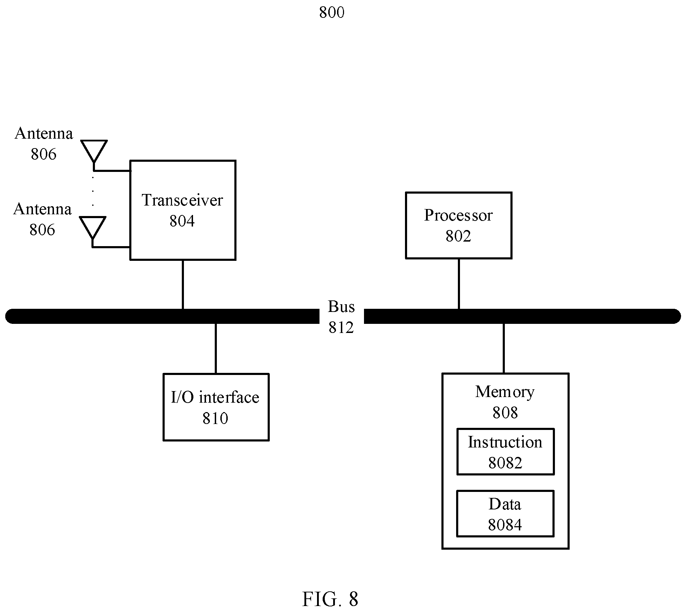

FIG. 8 is a schematic diagram of a hardware structure of a communications device 800 according to an embodiment of the present invention. In a specific implementation process, the communications device 800 may be configured to implement user equipment, for example, the user equipment 200, or may be configured to implement an access device, for example, the access device 300 and the access device 400.

As shown in FIG. 8, the communications device 800 includes a processor 802, a transceiver 804, a plurality of antennas 806, a memory 808, an I/O (input/output, Input/Output) interface 810, and a bus 812. The memory 808 is further configured to store an instruction 8082 and data 8084. In addition, the processor 802, the transceiver 804, the memory 808, and the I/O interface 810 are communicatively connected to each other by using the bus 812. The plurality of antennas 806 are connected to the transceiver 804. In a specific implementation process, the processor 802, the transceiver 804, the memory 808, and the I/O interface 810 may also be communicatively connected to each other in another connection manner other than the bus 812.

The processor 802 may be a general-purpose processor, for example, but not limited to, a central processing unit (Central Processing Unit, CPU), or may be a dedicated processor, for example, but not limited to, a digital signal processor (Digital Signal Processor, DSP), an application specific integrated circuit (Application Specific Integrated Circuit, ASIC), and a field programmable gate array (Field Programmable Gate Array, FPGA). In addition, the processor 802 may alternatively be a combination of a plurality of processors. Particularly, in the technical solutions provided in the embodiments of the present invention, when the communications device 800 is configured to implement the user equipment, the processor 802 may be configured to perform the operations performed by the processing module 204 in the user equipment 200. When the communications device 800 is configured to implement the access device, the processor 802 may be configured to perform operations performed by the processing modules 302 and 402 in the access device 300 and the access device 400. The processor 802 may be a processor specially designed to perform the foregoing operations, or may be a processor that performs the foregoing operations by reading and executing the instruction 8082 stored in the memory 808. The processor 802 may need to use the data 8084 in a process of performing the foregoing operations.

The transceiver 804 is configured to send a signal by using at least one of the plurality of antennas 806, and receive a signal by using at least one of the plurality of antennas 806. Particularly, in the technical solutions provided in the embodiments of the present invention, when the communications device 800 is configured to implement the user equipment, the processor 802 may be configured to perform the operations performed by the transceiver module 202 in the user equipment 200. When the communications device 800 is configured to implement the access device, the processor 802 may be configured to perform operations performed by the transceiver modules 304 and 404 in the access device 300 and the access device 400.

The memory 808 may be various types of storage media, for example, a random access memory (Random Access Memory, RAM), a read only memory (Read Only Memory, ROM), a non-volatile RAM (Non-volatile RAM, NVRAM), a programmable ROM (Programmable ROM, PROM), an erasable PROM (Erasable PROM, EPROM), an electrically erasable PROM (Electrically Erasable PROM, EEPROM), a flash memory, an optical memory, and a register. The memory 808 is specifically configured to store the instruction 8082 and the data 8084. The processor 802 may perform the foregoing operations by reading and executing the instruction 8082 stored in the memory 808, and may need to use the data 8084 in a process of performing the foregoing operations.

The I/O interface 810 is configured to receive an instruction and/or data from a peripheral device, and output an instruction and/or data to the peripheral device.

It should be noted that in a specific implementation process, the communications device 800 may further include other hardware components, which are not enumerated in this specification.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solidstate drive (Solid State Disk, SSD)), or the like.

To sum up, the foregoing descriptions are merely embodiments of the present invention, but are not intended to limit the protection scope of the present invention.

## Claims

1. User equipment (200), comprising:
a transceiver module (202), configured to receive configuration information, wherein the configuration information is used to configure at least one physical resource block, PRB, bundling size; and
a processing module (204), configured to determine a precoding resource block group, PRG, size based on a preset indication rule and
the at least one PRB bundling size,
wherein the at least one PRB bundling size comprises a plurality of PRB bundling sizes, and the PRG size is a PRB bundling size that is in the plurality of PRB bundling sizes,
wherein the preset indication rule is one of the following rules:
a rule 1: a maximum value of the plurality of PRB bundling sizes is used as the PRG size;
a rule 2: a minimum value of the plurality of PRB bundling sizes is used as the PRG size; and
a rule 3: in the plurality of PRB bundling sizes, a PRB bundling size whose arrangement location is a preset location is used as the PRG size, wherein the arrangement location is a location in a sequentially arranged list of bundling sizes.

2. The user equipment (200) according to claim 1, wherein the preset location is the first location or the last location.

3. The user equipment (200) according to claim 1, wherein the configuration information comprises indication information, and the indication information is used to indicate the PRB bundling size that is in the plurality of PRB bundling sizes and that is used as the PRG size.

4. The user equipment (200) according to any one of claims 1 to 3, wherein the configuration information is sent by using radio resource control RRC signaling.

5. A wireless network (100) comprising the user equipment (200) of claim 1 and an access device (300), the access device (300) comprising:
a processing module (302), configured to generate the configuration information, and
a transceiver module (304), configured to send the configuration information.

6. The wireless network (100) according to claim 5, wherein the preset location is the first location or the last location.

## Patentansprüche

1. Benutzergerät (200), umfassend:
ein Sender-/Empfängermodul (202), das dazu konfiguriert ist, Konfigurationsinformationen zu empfangen, wobei die Konfigurationsinformationen verwendet werden, um mindestens eine physische Ressourcenblock-Bündelungsgröße (PRB) zu konfigurieren; und
ein Verarbeitungsmodul (204), das dazu konfiguriert ist, eine Vorcodierungs-Ressourcenblock-Gruppengröße (PRG) basierend auf einer voreingestellten Angaberegel und der mindestens einen PRB-Bündelungsgröße zu bestimmen,
wobei die mindestens eine PRB-Bündelungsgröße eine Vielzahl von PRB-Bündelungsgrößen umfasst und die PRG-Größe eine PRB-Bündelungsgröße ist, die in der Vielzahl von PRB-Bündelungsgrößen enthalten ist,
wobei die voreingestellte Angaberegel eine der folgenden Regeln ist:
eine Regel 1: ein Höchstwert der Vielzahl von PRB-Bündelungsgrößen wird als PRG-Größe verwendet;
eine Regel 2: ein Mindestwert der Vielzahl von PRB-Bündelungsgrößen wird als PRG-Größe verwendet; und
eine Regel 3: in der Vielzahl von PRB-Bündelungsgrößen wird eine PRB-Bündelungsgröße, deren Anordnungsstandort ein voreingestellter Standort ist, als die PRG-Größe verwendet,
wobei der Anordnungsstandort ein Standort in einer sequentiell angeordneten Liste von Bündelungsgrößen ist.

2. Benutzergerät (200) nach Anspruch 1, wobei der voreingestellte Standort der erste oder der letzte Standort ist.

3. Benutzergerät (200) nach Anspruch 1, wobei die Konfigurationsinformationen Angaben umfassen und die Angaben dazu verwendet werden, die PRB-Bündelungsgröße anzugeben, die in der Vielzahl von PRB-Bündelungsgrößen enthalten ist und als PRG-Größe verwendet wird.

4. Benutzergerät (200) nach einem der Ansprüche 1 bis 3, wobei die Konfigurationsinformationen unter Verwendung der Signalisierung einer Funkressourcensteuerung (RRC) gesendet werden.

5. Drahtloses Netzwerk (100), umfassend das Benutzergerät (200) nach Anspruch 1 und eine Zugangsvorrichtung (300), wobei die Zugangsvorrichtung (300) Folgendes umfasst:
ein Verarbeitungsmodul (302), das dazu konfiguriert ist, die Konfigurationsinformationen zu erzeugen, und
ein Sender-/Empfängermodul (304), das dazu konfiguriert ist, die Konfigurationsinformationen zu senden.

6. Drahtloses Netzwerk (100) nach Anspruch 5, wobei der voreingestellte Standort der erste oder der letzte Standort ist.

## Revendications

1. Équipement utilisateur (200), comprenant :
un module émetteur-récepteur (202), configuré pour recevoir des informations de configuration, dans lequel les informations de configuration sont utilisées pour configurer au moins une taille de regroupement de blocs de ressources physiques, PRB ; et
un module de traitement (204), configuré pour déterminer une taille de groupe de blocs de ressources de précodage, PRG, sur la base d'une règle d'indication prédéfinie et de l'au moins une taille de regroupement PRB,
dans lequel l'au moins une taille de regroupement PRB comprend une pluralité de tailles de regroupement PRB, et la taille PRG est une taille de regroupement PRB qui est dans la pluralité de tailles de regroupement PRB,
dans lequel la règle d'indication prédéfinie est l'une des règles suivantes :
règle 1 : une valeur maximale de la pluralité de tailles de regroupement PRB est utilisée comme taille PRG ;
règle 2 : une valeur minimale de la pluralité de tailles de regroupement PRB est utilisée comme taille PRG ; et
règle 3 : dans la pluralité de tailles de regroupement PRB, une taille de regroupement PRB dont l'emplacement d'agencement est un emplacement prédéfini est utilisée comme taille PRG, dans lequel l'emplacement d'agencement est un emplacement dans une liste organisée séquentiellement de tailles de regroupement.

2. Équipement utilisateur (200) selon la revendication 1, dans lequel l'emplacement prédéfini est le premier emplacement ou le dernier emplacement.

3. Équipement utilisateur (200) selon la revendication 1, dans lequel les informations de configuration comprennent des informations d'indication, et les informations d'indication sont utilisées pour indiquer la taille de regroupement PRB qui se trouve dans la pluralité de tailles de regroupement PRB et qui est utilisée comme taille PRG.

4. Équipement utilisateur (200) selon l'une quelconque des revendications 1 à 3, dans lequel les informations de configuration sont envoyées en utilisant une signalisation de commande de ressources radio RRC.

5. Réseau sans fil (100) comprenant l'équipement utilisateur (200) selon la revendication 1 et un dispositif d'accès (300), le dispositif d'accès (300) comprenant :
un module de traitement (302), configuré pour générer les informations de configuration, et
un module émetteur-récepteur (304), configuré pour envoyer les informations de configuration.

6. Réseau sans fil (100) selon la revendication 5, dans lequel l'emplacement prédéfini est le premier emplacement ou le dernier emplacement.
